# EUROPEAN PATENT APPLICATION

(11) **EP 4 057 103 A1**
(43) Date of publication of application: **14.09.2022**
(21) Application number: 21161462.3
(22) Date of filing: 09.03.2021
(51) Int. Cl.: G05D 16/20, G05D 23/19, F17C 5/06

(54) **PRESSURE REDUCTION APPARATUS**

(71) Applicant: Viafin GAS Oy, 01740 Vantaa (FI)
(72) Inventor: Happonen, Sam, 01740 Vantaa (FI); Virtanen, Vesa Petteri, 01740 Vantaa (FI)
(74) Representative: Kolster Oy Ab

(57) **Abstract**

The invention relates to a pressure reduction apparatus (1) comprising: at least a first and second inlet (4, 5, 6) receiving gas with an inlet pressure from at least a first and second gas source (7, 8, 9) providing flammable gas, a pressure reducer (10) reducing a pressure of the gas received via the at least first or second inlet, and an outlet (11) passing on gas from the pressure reducer (10) with an outlet pressure. In order to obtain an efficient and compact pressure reduction apparatus, the pressure reducer (10) reduces the pressure of the gas to the outlet pressure in one single pressure-reduction step from the inlet pressure to the outlet pressure. The pressure reduction apparatus (1) is provided with a gas heater (12) between the at least first and second inlets (4, 5, 6) and the pressure reducer (10), the gas heater (12) comprising an electrical heating insert (13) which heats gas in the gas heater.

## Description

### BACKGROUND OF THE INVENTION

### FIELD OF THE INVENTION

This invention relates to a pressure reduction apparatus and more particularly to an apparatus capable of reducing a very high pressure of a flammable gas in a controlled and secure way to an outlet pressure suitable for use by gas consuming devices.

### DESCRIPTION OF PRIOR ART

For practical reasons it is not possible to provide fixed pipelines feeding flammable gases to all geographical locations where consumption of such gases are needed. Due to this, a common approach is to store the gas in tanks or containers at locations where no pipelines exist. Such tanks may be interchangeable, for instance, which means that once the gas in a tank has been consumed, the tank is transported to a facility where it can be refilled with gas before the tank is returned.

In order improve efficiency it is desirable that at the location where gas is consumed, the amount of gas in one tank can be maximized. Due to this the pressure of the gas in the tank is much higher than devices consuming gas are able to handle. Consequently, a solution is needed to reduce the pressure of the flammable gas before it reaches a device consuming gas.

A challenge with such a solution is to provide a secure and efficient pressure reduction apparatus which is as compact as possible.

### SUMMARY OF THE INVENTION

An object of the present invention is to solve the above-mentioned drawback. This object is achieved with the pressure reduction apparatus according to independent claim 1.

Use of a pressure reduction apparatus which reduces the pressure of the gas in one single pressure-reduction step, while heating the gas in a gas heater by means of an electrical heating insert, makes it possible to obtain a secure and efficient pressure reduction apparatus which has a very compact size.

### BRIEF DESCRIPTION OF DRAWINGS

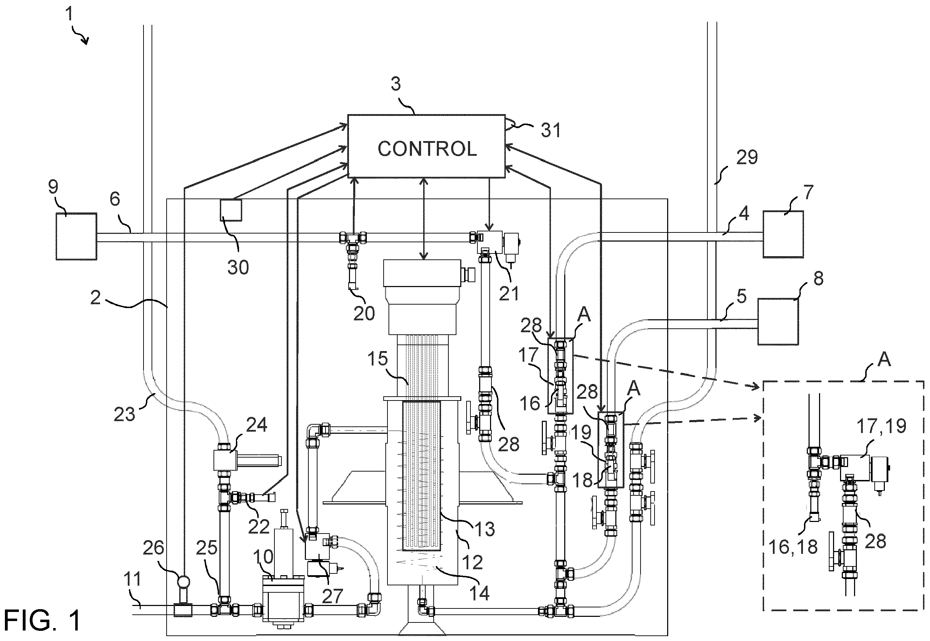

In the following the present invention will be described in closer detail by way of example and with reference to the attached drawing, in which Figure 1 illustrates a first embodiment of a pressure reduction apparatus.

### DESCRIPTION OF AT LEAST ONE EMBODIMENT

The pressure reduction apparatus 1 of Figure 1 comprises a housing 2 containing devices, and an electrical cabinet with a control unit 3 controlling the operation of the devices. The housing may be implemented as a steel container, for instance.

The pressure reduction apparatus 1 comprises at least a first 4 and a second inlet 5 receiving gas with an inlet pressure from a first 7 and second 8 gas source. The number of gas inlets and gas sources may vary depending on the implementation. In the illustrated example it is by way of example assumed that there is also a third inlet 6 and a third gas source 9. Each gas source may consist of a gas tank or of a container with one or more gas tanks which may be removed from the site and transported to a facility for filling with new gas such that they be returned to the site in a filled state, for instance. Alternatively, such tanks or containers may be filled with new gas at the site from a separate movable tank or container, for instance. Though not illustrated in the figures, preferably a filter is arranged in connection with each inlet 4, 5, 6, or alternatively a common filter on the flow path before the gas heater 12, for instance, to ensure that the provided gas is sufficiently clean.

The pressure reduction apparatus 1 is capable of receiving a flammable gas from the gas sources 7, 8, 9 with a very high inlet pressure, such as in the range of 10 - 270 barg (barg = bar gauge, pressure in bars above ambient or atmospheric pressure). In that case initially the inlet pressure may be 250 barg, for instance, when a new filled gas source is taken into use, while the final inlet pressure may correspond to a lower limit value of 15 barg, for instance, when use of this (almost) empty gas source is ended. The flammable gas may be natural gas (CNG, Compressed Natural Gas) or biogas (CBG, Compressed BioGas), for instance.

A pressure reducer 10 reduces the pressure of the gas received via the inlets 4, 5 and 6. In the illustrated example, the pressure is reduced in one single pressure-reduction step only. An advantage with such a solution is that a very compact pressure reduction apparatus can be obtained, as a need to provide several separate pressure reducers in series can be avoided. Each such additional pressure reducer would require space and also additional devices such as valves and sensors, which all require additional space.

The outlet pressure from the outlet 11 of the pressure reduction apparatus is in the range of 2 to 5 barg, for instance. Typically devices consuming flammable gas are capable of receiving flammable gas with a pressure of around 3,5 barg.

A result of a pressure reduction from about 250 barg to 3,5 barg is a temperature drop for the gas. In the illustrated example, a gas heater 12 is utilized to increase a temperature of the gas before the gas reaches the pressure reducer 10. The gas heater 12 which is arranged between the inlets 4, 5, 6 and the pressure reducer 10 is provided with an electric heating insert 13 which heats the gas in the gas heater. The gas enters the gas heater 12 via an inlet in the bottom part and circulates in a pipe 14 around the electrical heat insert 13 towards an outlet while electrical heating elements 15 in the electrical heating insert 13 provide heat to the gas. In praxis the gas heater 12 may be configured to heat the flammable gas to a maximum temperature of about 60°C. Due to the heater, the temperature of the gas which is passed on via the outlet 11 can be kept at a level preventing that the gas consuming devices freeze due to gas having a temperature which is too low. The gas heater may be provided with an internal thermostat keeping the temperature below a set temperature value, or alternatively a separate temperature sensor may by utilized to provide the control unit 3 with temperature information, such that the control unit 3 may control the temperature of the gas heater 12. Fore additional safety, the gas heater 12 is preferably provided with an internal heat protection device which automatically interrupts additional heating by cutting supply of electric power to the gas heater in case the temperature reaches an upper limit value, such as 80°C, for instance. Additionally, the gas heater 12 may also be provided with a pressure sensor providing the control unit 3 with information about the current pressure of the gas in the gas heater.

Advantages of utilizing an electrical heat insert 13 instead of warm water circulation and a heat exchanger, for instance, to heat the flammable gas, are a more compact design and increased safety. In case of a leakage within the gas heater, a risk would exist that flammable gas is passed on with a warm water circulation to an external heater where an explosion could occur. Additionally, a warm water circulation would require additional piping, a circulation pump and an external heater which all require additional space. These drawbacks are avoided in the illustrated example due to the use of the electrical heat insert, which results in a compact, reliable and safe solution.

The illustrated pressure reduction apparatus is configured to work as an automatic pressure reduction apparatus which during operation is controlled by the control unit 3. The control unit 3 may be implemented by means of electric circuitry or a combination of electric circuitry and a processor running a program stored in a memory. This control unit may control the pressure reduction apparatus in such a way that only one of the available gas sources provides gas at each moment, that a switchover from an empty gas source to a filled gas source occurs automatically when needed, and that the operation of the pressure reduction apparatus is implemented in a way taking into account all safety regulations set by authorities regarding handling of flammable gases.

The first inlet 4 is provided with a first pressure sensor 16 measuring the pressure of the gas entering the first inlet from the first gas source 7 and a first valve 17 closing the first inlet 4 when the first pressure sensor indicates that the pressure of the first gas source 7 has reached a lower limit. Similarly, the second inlet 5 is provided with a second pressure sensor 18 measuring the pressure of the gas entering the second inlet from the second gas source 8 and a second valve 19 closing the second inlet 5 when the second pressure sensor indicates that the pressure of the second gas source 8 has reached a lower limit. In Figure 1 an enlargement of the first and second valves and the first and second pressure sensors is illustrated in box A.

Finally, in Figure 1, also the third inlet 6 is provided with a pressure sensor 20 measuring the pressure of the gas entering the third inlet from the third gas source 9 and a valve 21 closing the third inlet 6 when the pressure sensor 20 indicates that the pressure of the third gas source 9 has reached a lower limit.

The pressure sensors 16, 18, 20 and the valves 17, 19, 21, which may be magnet valves, are all electrically connected to the control unit 3, such that the control unit 3 receives pressure information and can change the status of the valves between a closed position preventing flow and an open position allowing flow. This facilitates automatic selection of the used gas source, such that only one gas source 4, 5, 6 is in use, with the corresponding valve open, at each moment. Once the pressure of the used gas source falls below the lower limit, the control unit triggers a change of position for the valves 17, 18, 19, such that the empty gas source is disconnected by a valve 17, 18, 19 from providing gas to the pressure reduction apparatus and one of the remaining gas sources, such as a filled tank, is connected by a corresponding valve to supply gas to the pressure reduction apparatus. In this way the pressure reduction apparatus is capable to operate automatically.

The controller 3 may be configured to automatically use the available gas sources in a predetermined order. One alternative is that the controller 3 always gives highest priority to the first gas source 7 by using it in case the inlet pressure from the first gas source is high enough, in other words above the lower limit. If not, the controller 3 gives priority to the second gas source 8 by using it in case the inlet pressure from the second gas source is high enough. If not, the controller uses the third gas source 8, if the inlet pressure from the third gas source is high enough. Once one of the gas sources has been selected for use, the controller may control the operation such that this selected gas source remains in use until the inlet pressure from it reaches the lower limit value. Due the possibility of automatic switchover between several available gas sources, one or more of the previously used gas sources may have been replaced by a full one, or alternatively filled, such that a switchover can be done to the first gas source before the inlet pressure from the third or last available gas source drops below the limit value.

The illustrated pressure reduction apparatus 1 is provided with a third pressure sensor 22 measuring the outlet pressure at the outlet 11. In the illustrated example, this third pressure sensor 22 has by way of example been arranged in connection with a pressure relief pipe 23. A first end 25 of the pressure relief pipe is connected between the pressure reducer and the outlet 11. The controller obtains information about the outlet pressure via the third pressure sensor 22.

A third valve 24 is arranged in the pressure relief pipe 23. In a closed state the third valve 24 prevents flow of gas through the pressure relief pipe 23 when the outlet pressure reduction device is in an operational mode, in other words passes on flammable gas via the outlet 11 with a desired outlet pressure. However, in case the outlet pressure has reached an upper limit value, the third valve is in an open state allowing flow of gas via the pressure relief valve to surroundings. The limit value may vary depending on the implementation. In most cases a suitable limit value is 5 barg or less, such as 3,7 barg, for instance.

It is possible that the third valve 24 is a magnet valve which is electrically controllable by the control unit 3 on the basis of the outlet pressure as indicated by the third pressure sensor 22. If the pressure sensor 22 indicates high pressure, it will trigger SIL2 (Safety Integrity Level, standard IEC 61508) class safety relay inside control unit 3. The safety relay cuts power off from all magnetic valves and this function is used as slam shut valve according to Finnish natural gas legislation. However, for safety reasons in most implementations the third valve 24 is preferably a pressure relief valve which has a mechanical design allowing it to automatically switch to an open state once the pressure in the first end 25 of the pressure relief pipe 23 has reached the upper limit value.

A temperature sensor 26 is arranged to measure the temperature of the gas in proximity of the outlet 11. In the illustrated example, this temperature sensor is located between the pressure reducer 10 and the outlet 11. A fourth valve 27 allows in an open state flow of gas via the outlet 11 when the pressure reduction device 1 is in the operational mode, in other words in a state where it can deliver gas via the outlet 11. If the temperature sensor 26 indicates that the temperature of the gas at the outlet has reached a lower limit value, the control unit 3 controls the fourth valve 27 to a closed state to prevent that gas is outputted via the outlet 11. Depending on the implementation, the lower limit value may be within a range of -4°C to -6°C, such as -5°C, for instance. At this stage, in addition to closing the fourth valve 27, the control unit 3 may in some implementations close also a valve 17, 19, 21 corresponding to the gas source 7, 8, 9 which is currently providing gas to prevent that additional gas is provided to the inlets 4, 5, 6 of the pressure reduction apparatus 1.

In the illustrated example it is by way of example assumed that the fourth vale 27 is located between the gas heater 12 and the pressure reducer 10. By closing a valve at this location when the temperature of the gas from the outlet 11 is too low, it becomes possible to continue heating the gas in the pipe 14 of the gas heater 12 until the temperature of the gas in the gas heater again is high enough. In this way also the pressure reducer 10 may be protected from receiving gas which is too cold and which might cause the pressure reducer to freeze in case operation of the pressure reducer would continue. Preferably, the temperature of the gas it at this stage heated in the gas heater to a temperature which ensures that the temperature of the gas from the outlet 11 is about +5°C when supply of gas from the outlet 11 eventually continues. At this stage the fourth valve 27 (and possible other valves 17, 18, 19 which where closed due to the low outlet temperature) can again be opened such that gas can again be provided via the outlet 11. This kind of temporary interruption in the gas distribution via the outlet 11 makes it possible to compensate for a situation where the gas heater 12 temporarily does not have sufficient heating capacity to heat the gas to a sufficiently high temperature.

On the inlets side, in other words in the flow direction before the gas heater 12, the pressure reduction apparatus 1 is provided with non-return valves 28 in connection with each inlet 4, 5, 6 to ensure that flow in a direction towards the inlets is not possible. Additionally, a pipe 29 is provided on the inlet side of the apparatus for facilitating efficient removal of the gas to the surroundings by opening of manually operated valves during maintenance work, for instance.

In the illustrated example, the pressure reduction apparatus is additionally provided with one or more gas detectors 30 located inside the housing 2 and one or more manual emergency stop switches 31 at suitable locations on the outside and/or inside of the housing 2. In this way the control unit 3 can receive information about leaking gas or a situation where a service person believes that an emergency stop is necessary. Once an emergency stop has been triggered, the control unit 3 may close all inlet valves 17, 19, 21 and the fourth valve 27 which means that the gas heater 12 is isolated. Additionally, the electric power supply to the gas heater may be cut.

It is to be understood that the above description and the accompanying figures are only intended to illustrate the present invention. It will be obvious to a person skilled in the art that the invention can be varied and modified without departing from the scope of the invention.

## Claims

1. A pressure reduction apparatus (1) comprising:
at least a first and second inlet (4, 5, 6) receiving gas with an inlet pressure from at least a first and second gas source (7, 8, 9) providing flammable gas,
a pressure reducer (10) reducing a pressure of the gas received via the at least first or second inlet, and
an outlet (11) passing on gas from the pressure reducer (10) with an outlet pressure, **characterized in that**
the pressure reducer (10) reduces the pressure of the gas to the outlet pressure in one single pressure-reduction step from the inlet pressure to the outlet pressure, and
the pressure reduction apparatus (1) is provided with a gas heater (12) between the at least first and second inlets (4, 5, 6) and the pressure reducer (10), the gas heater (12) comprising an electrical heating insert (13) which heats gas in the gas heater.

2. The pressure reduction apparatus according to claim 1, wherein
the first inlet (4) is provided with a first pressure sensor (16) measuring the pressure of the first gas source (7) and a first valve (17), the first valve closing the first inlet when the first pressure sensor indicates that the pressure of the first gas source has reached a lower limit value, and
the second inlet (5) is provided with a second pressure sensor (18) measuring the pressure of the second gas source (8) and a second valve (19), the second valve (19) closing the second inlet (18) when the second pressure sensor indicates that the pressure of the second gas source (8) has reached a lower limit value.

3. The pressure reduction apparatus according to claim 1 or 2, wherein the pressure reduction apparatus comprises:
a pressure relief pipe (23) having a first end (25) connected between the pressure reducer (10) and the outlet (11), and
a third valve (24) which is in an closed state preventing flow of gas through the pressure relief pipe (23) when the pressure reduction device is (1) in an operational mode, and in an open state allowing flow of gas through the pressure relief pipe (23) to surroundings when the outlet pressure has reached an upper limit value.

4. The pressure reduction apparatus according to one of claims 1 to 3, wherein the pressure reduction apparatus comprises:
a temperature sensor (26) measuring a temperature of gas provided from the pressure reducer (10) to the outlet (11), and
a fourth valve (27) which is in an open state allowing flow of gas via the outlet (11) when the pressure reduction device (1) is in an operational mode, and which is in a closed state preventing flow of gas via the outlet (11) when the temperature sensor (26) indicates that the temperature of the gas has reached a lower limit value.

5. The pressure reduction apparatus according to one of claims 1 to 4, wherein the pressure reduction apparatus comprises a control unit (3) automatically controlling the operation of the pressure reduction apparatus by receiving measurement signals from the first and second pressure sensors (16, 18) and from the temperature sensor (26) and which sends control signals to the first, second and fourth valve (17, 19, 27) to change the state of the respective valves between a closed state and open state depending on the received measurement signals.

6. The pressure reduction apparatus according to claim 5, wherein
the control unit (3) controls the first and second valves (17, 19) such that only one of the at least first and second gas sources (7, 8, 9) at each moment provides gas, and
when the pressure of the at least first or second gas source (7, 8, 9) providing gas at a specific moment is reduced such that the lower limit value is reached, the control unit (3) controls a corresponding valve (17, 19, 21) to a closed position and controls a valve (17, 18, 19) of another one of the at least first and second gas sources (7, 8, 9) to an open position.

7. The pressure reduction apparatus according to claim 5 or 6, wherein the control unit (3) gives highest priority to one of the at least first and second gas sources (7, 8, 9) and controls this gas source to provide gas when the gas pressure from another one of the at least first or second gas sources (7, 8, 9) has reached the lower limit, in case the gas pressure from the gas source with the highest priority at that moment has not reached the lower limit.

8. The pressure reduction apparatus according to one of claims 5 to 7, wherein the pressure reduction device is provided with one or more gas detectors (30) inside the housing and one or more manual emergency stop switches (31), and
the control unit (3) is arranged to trigger an emergency stop in response to an indication of gas detection from a gas detector (30) or an emergency stop triggered by an emergency stop switch (31), by closing the valves (17, 19, 21) at the inlets (4, 5, 6) from the at least first and second gas sources (7, 8, 9) and the fourth valve (27).

9. The pressure reduction apparatus according to one of claims 1 to 8, wherein the flammable gas is natural gas or biogas.

10. The pressure reduction apparatus according to one of claims 1 to 9, wherein the inlet pressure is in the range of 10 - 270 barg and the outlet pressure is in the range of 3 to 5 barg.

11. The pressure reduction apparatus according to one of claims 1 to 10, wherein the gas heater heats the gas to a maximum temperature within the range 55°C to 65°C.

12. The pressure reduction apparatus according to one of claims 4 to 11, wherein the fourth valve (27) is in the closed state when the temperature of the gas has reached a lower limit value which is within a range of -4°C to -6°C.

13. The pressure reduction apparatus according to one of claims 1 to 12, wherein the pressure reduction comprises one or more gas sources in the form of gas tanks.
